# EUROPÄISCHE PATENTANMELDUNG

(11) **EP 3 480 431 A1**
(43) Veröffentlichungstag der Anmeldung: **08.05.2019**
(21) Anmeldenummer: 18176260.0
(22) Anmeldetag: 06.06.2018
(51) Int. Cl.: F01D 5/18

(54) **BAUTEIL FÜR EINE GASTURBINE MIT EINER STRUKTUR MIT EINEM GRADIENTEN IM ELASTIZITÄTSMODUL UND ADDITIVES HERSTELLUNGSVERFAHREN**

(30) Priorität: 02.11.2017 DE 102017010125; 02.11.2017 DE 102017010127
(71) Anmelder: MTU Aero Engines AG, 80995 München (DE)
(72) Erfinder: Rick, Frank, 82166 Gräfelfing (DE)

(57) **Zusammenfassung**

Beschrieben wird ein Bauteil (10) für eine Gasturbine, insbesondere Fluggasturbine, wobei das Bauteil (10) im Betrieb der Gasturbine im Einflussbereich einer Primärströmung oder einer Sekundärströmung von die Gasturbine durchströmendem Fluid angeordnet ist, wobei das Bauteil (10) eine Bauteilhauptrichtung aufweist, die im eingebauten Zustand des Bauteils (10) in der Gasturbine der Axialrichtung oder der Radialrichtung oder der Umfangsrichtung der Gasturbine entsprechen kann, wobei das Bauteil bezogen auf einen zur Bauteilhauptrichtung im Wesentlichen orthogonal verlaufenden Profilquerschnitt, wenigstens einen Bereich aufweist, der eine geometrische Struktur (20, 24) mit untereinander verbundenen rippenartigen Wandungen (23) und von den Wandungen (23) umgebenen Hohlräumen (21) aufweist, wobei die Wandungen (23) und die Hohlräume (21) derart ausgebildet sind, dass das Bauteil (10) in einer Richtung quer, insbesondere orthogonal, zur Bauteilhauptrichtung einen Gradienten im Elastizitätsmodul aufweist, der zu Eigendämpfung führt. Ferner wird ein additives Herstellungsverfahren für ein solches Bauteil beschrieben.

## Beschreibung

Die vorliegende Erfindung betrifft ein Bauteil für eine Gasturbine, insbesondere Fluggasturbine, wie beispielsweise eine Schaufel der Gasturbine oder ein Dichtungselement. Ferner betrifft die Erfindung ein additives Herstellungsverfahren für derartige Bauteile.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Bauteile von Gasturbinen, insbesondere Fluggasturbinen, werden im Betrieb der Gasturbine in ihren Eigenfrequenzen angeregt. Solche Eigenfrequenzanregungen können im schlimmsten Fall zu einem Bauteilversagen führen. Um die Anregung von Eigenschwingungen zu vermeiden bzw. ausreichend zu vermindern werden bei Bauteilen von Gasturbinen, insbesondere bei Schaufeln von Gasturbinen, Maßnahmen zur Schwingungsdämpfung ergriffen, beispielsweise durch Wechselwirkung mit zusätzlichen Dämpfungselementen, die an den entsprechenden Bauteilen vorzusehen sind. Das Vorsehen von zusätzlichen Dämpfungselementen führt allerdings zu einem erhöhten Gewicht der betreffenden Bauteile und zusätzlichen Kosten.

Die der Erfindung zu Grunde liegende Aufgabe ist, Bauteile bereitzustellen, bei denen Eigenschwingungen ohne zusätzliche Dämpfungselemente gedämpft werden können, insbesondere soll die Schwingfestigkeit von Bauteilen in Turbinen und Verdichtern einer Gasturbine verbessert werden.

Gemäß einem ersten Aspekt wird zur Lösung der Aufgabe ein Bauteil für eine Gasturbine, insbesondere Fluggasturbine, vorgeschlagen, wobei das Bauteil im Betrieb der Gasturbine im Einflussbereich einer Primärströmung oder einer Sekundärströmung von die Gasturbine durchströmendem Fluid angeordnet ist, wobei das Bauteil eine Bauteilhauptrichtung aufweist, die im eingebauten Zustand des Bauteils in der Gasturbine der Axialrichtung oder der Radialrichtung oder der Umfangsrichtung der Gasturbine entsprechen kann, wobei das Bauteil bezogen auf einen zur Bauteilhauptrichtung im Wesentlichen orthogonal verlaufenden Profilquerschnitt, wenigstens einen Bereich aufweist, der eine geometrische Struktur mit untereinander verbundenen rippenartigen Wandungen und von den Wandungen umgebenen Hohlräumen aufweist, wobei die Wandungen und die Hohlräume derart ausgebildet sind, dass das Bauteil in einer Richtung quer, insbesondere orthogonal, zur Bauteilhauptrichtung einen Gradienten im Elastizitätsmodul aufweist, der zu Eigendämpfung führt.

Durch eine graduelle Veränderung des Elastizitätsmoduls (Young's Modulus) oder/und der geometrischen Struktur des fertigen Bauteils kann eine höhere Steifigkeit des Bauteils und somit verbesserte Dämpfungseigenschaften erreicht werden. Dabei sind die rippenartigen Wandungen bzw. Strukturen und die von diesen Wandungen begrenzten Hohlräume derart dimensioniert, dass der gewünschte Gradient für das Eigenschwingungsverhalten des Bauteils eingestellt bzw. erreicht werden kann. Insbesondere können die Wanddicken der Wandungen und die Querschnittsflächen der Hohlräume variieren. Beispielsweise ist es denkbar, dass die Dimensionen der Wandungen oder/und Hohlräume in Abhängigkeit von ihrer Position im Bauteil unterschiedlich sind.

Die in dem Bauteil vorgesehene geometrische Struktur kann zumindest abschnittsweise einer pflanzlichen Struktur nachgebildet ist. Dabei ist es bevorzugt, dass die geometrische Struktur zumindest abschnittsweise von dem Aufbau von Pfahlrohr (Arundo donax) abgeleitet ist. Das Pfahlrohr, auch Riesenschilf genannt, eignet sich in besonderer Weise als Vorbild für die Ausgestaltung von Bauteilen in Gasturbinen, weil sein biologischer Aufbau, insbesondere seine innere Struktur, zu einer hohen Biegesteifigkeit kombiniert mit guten Dämpfungseigenschaften führt.

Bei dem Bauteil kann sich die geometrische Struktur entlang der Bauteilhauptrichtung über wenigstens 50% der Länge des Bauteils in der Bauteilhauptrichtung erstrecken. Mit anderen Worten wird davon ausgegangen, dass bei einem betreffenden Bauteil einer Gasturbine ein Bereich, der entsprechend einer pflanzlichen Struktur, insbesondere wie ein Pfahlrohr aufgebaut ist, mindestens auf etwa der Hälfte einer Längserstreckung des Bauteils vorliegt. Die geometrische Struktur zur Erreichung von Eigendämpfung wird in der Regel allerdings weniger als 100% der Längserstreckung des betreffenden Bauteils ausmachen, weil jedes Bauteil an seinen Enden Anschlussstücke bzw. Endstücke aufweist, die eine spezielle Formgebung aufweisen und in deren Bereich die Umsetzung derartiger geometrischer Strukturen nicht vorgesehen ist.

Bei dem Bauteil kann die geometrische Struktur bezogen auf die Gesamtfläche eines Profilquerschnitts durch das Bauteil wenigstens 20% der Gesamtfläche einnehmen. Es wird also davon ausgegangen, dass von einer Querschnittsfläche des Bauteils, die in der Regel orthogonal zur Bauteilhauptrichtung bzw. Längserstreckung des Bauteils liegt, wenigstens ein Fünftel der gesamten Querschnittsfläche durch eine entsprechende geometrische Struktur, insbesondere eine Struktur in Anlehnung an ein Pfahlrohr, vorhanden ist. Die geometrische Struktur zur Erreichung von Eigendämpfung wird in der Regel allerdings weniger als 100% der Gesamtfläche in einem Profilquerschnitt des betreffenden Bauteils ausmachen, weil jedes Bauteil an seinen die Fläche des Profilquerschnitts begrenzenden Außenseiten so ausgebildet ist, dass eine für die Anordnung des Bauteils im Einflussbereich von Strömungen geeignete Außenfläche vorliegt.

Ferner kann bei dem Bauteil die geometrische Struktur bezogen auf den Profilquerschnitt des Bauteils entlang des Umfangs des Bauteils angeordnet sein. Dabei kann das Bauteil wenigstens einen Kernabschnitt aufweisen, der von der geometrischen Struktur umgeben ist, wobei der Kernabschnitt aus einem Vollmaterial gebildet ist.

Das Bauteil kann eine Schaufel für eine Turbine oder einen Verdichter der Gasturbine, insbesondere Fluggasturbine, sein mit einer Vorderkante und einer Hinterkante, die im Wesentlichen parallel zur Bauteilhauptrichtung verlaufen, wobei zwischen der Vorderkante und der Hinterkante eine Saugseite und einer Druckseite verlaufen, wobei die geometrische Struktur bei der Schaufel zwischen der Saugseite und der Druckseite ausgebildet ist.

Entsprechend kann eine Schaufel einer Gasturbine durch Verwendung der geometrischen Struktur nach biologischem Vorbild in einem inneren Bereich nach bionischem Vorbild gefertigt werden, so dass für einen jeweiligen Einsatzzweck der Schaufel gewünschte Festigkeits- und Dämpfungseigenschaften erreicht werden können. Die Außenkontur der Schaufel, also insbesondere die der Fluidströmung ausgesetzten Vorder- und Hinterkante, sowie Druck- und Saugseite sind dabei in der Regel nicht nach dem bionischen Vorbild ausgestaltet, sondern weisen eine herkömmliche Oberflächenstruktur auf.

Bei einer Schaufel kann die geometrische Struktur derart ausgestaltet sein, dass zumindest ein der pflanzlichen Struktur nachgebildeter Hohlraum als Kühlkanal eingerichtet ist, insbesondere als Kühlkanal zur Kühlung, insbesondere Luftkühlung der Schaufel.

Ferner kann die die Schaufel im Bereich zwischen der Saugseite und der Druckseite zumindest abschnittsweise wenigstens zwei unterschiedliche Materialien oder unterschiedliche Materialzusammensetzungen aufweisen. Dies ermöglicht, neben der Verwendung von geometrischen Strukturen nach biologischem Vorbild, eine Einflussnahmen bzw. Verbesserung der Festigkeits- und Dämpfungseigenschaften durch geeignete Materialwahl und Materialkombination. Denkbar ist beispielsweise, dass in Abhängigkeit der im Betrieb wirkenden Kräfte in Richtung der Saugseite mehrheitlich ein anderes Material eingesetzt wird als in Richtung der Druckseite, oder dass in Bezug auf die Strömungsrichtung ein vorderer Bereich der Schaufel, beispielsweise einschließlich der Vorderkante, mehrheitlich aus einem anderen Material gebildet ist als ein hinterer Bereich, beispielsweise einschließlich der Hinterkante. Denkbar ist auch, dass die Schaufel entlang ihrer radialen Erstreckung aus unterschiedlichen Materialen aufgebaut ist, insbesondere kann eine Schaufelbasis mehrheitlich aus einem anderen Material gefertigt sein als eine Schaufelspitze.

Das Bauteil kann ein Dichtungselement, insbesondere eine Fischmauldichtung, für eine Turbine oder einen Verdichter der Gasturbine, insbesondere Fluggasturbine, sein mit einer bezogen auf einen eingebauten Zustand in der Gasturbine radialen Innenseite und einer radialen Außenseite, wobei die Bauteilhauptrichtung im Wesentlichen der Umfangsrichtung der Gasturbine entspricht, und wobei das Dichtungselement zwischen der radialen Innenseite und der radialen Außenseite wenigstens einen Bereich aufweist, der die geometrische Struktur aufweist. Dabei kann das Dichtungselement im Bereich zwischen der radialen Innenseite und der radialen Außenseite abschnittsweise wenigstens zwei unterschiedliche Materialien oder unterschiedliche Materialzusammensetzungen aufweisen.

Gemäß einem weiteren Aspekt wird die der Erfindung zu Grund liegende Aufgabe gelöst durch ein additives Verfahren zur Herstellung eines oben beschriebenen Bauteils für eine Gasturbine, umfassend die Schritte:
im Wesentlichen entlang der Bauteilhauptrichtung schichtweises Aufbauen des Bauteils mit seiner geometrischen Struktur durch abwechselndes Auftragen einer Pulverschicht aus einem ersten Material oder aus einer ersten Materialzusammensetzung und zumindest bereichsweises Verfestigen der aufgetragenen Pulverschicht durch Aufschmelzen und anschließendes Abkühlen, so dass insbesondere die rippenartigen Wandungen im Bereich der geometrischen Struktur verfestigt werden. Das Aufschmelzen kann dabei insbesondere durch einen Laserstrahl erfolgen.

Gemäß einem weiteren Aspekt kann ein additives Verfahren zur Herstellung eines oben beschriebenen Bauteils eingesetzt werden, umfassend die Schritte:
im Wesentlichen entlang der Bauteilhauptrichtung schichtweises Aufbauen des Bauteils mit seiner geometrischen Struktur durch abwechselndes Auftragen einer Pulverschicht aus einem ersten Material oder aus einer ersten Materialzusammensetzung und zumindest bereichsweises Verfestigen der aufgetragenen Pulverschicht durch Aufschmelzen und anschließendes Abkühlen,
wobei die Werkstoffeigenschaften des aufzutragenden Pulvers oder/und Prozessparameter der additiven Fertigung derart gewählt werden, dass für das fertige Bauteil ein Gradient im Elastizitätsmodul eingestellt wird, der im fertigen Bauteil zu Eigendämpfung führt.

Gemäß diesen beiden Verfahrensaspekten der Erfindung, die alternativ oder in Kombination eingesetzt werden können, wird eine graduelle Veränderung des Elastizitätsmoduls (Young's Modulus) oder/und der geometrischen Struktur des fertigen Bauteils umgesetzt, um eine höhere Steifigkeit des Bauteils und somit verbesserte Dämpfungseigenschaften zu erreichen. Durch das additive Herstellen der Bauteile können insbesondere geometrische Strukturen aufgebaut werden, bei denen bislang aus Vollmaterial bestehende Bereiche eines Bauteils, etwa einem Gussbauteil, durch strukturierte Bereiche ersetzt werden, wobei die strukturierten Bereiche insbesondere röhrenartige oder/und rippenartige Strukturen sowie Hohlräume aufweisen. Dabei sind die röhrenartigen oder/und rippenartigen Strukturen und die Hohlräume derart ausgeführt, dass der gewünschte Gradient für das Eigenschwingungsverhalten des Bauteils eingestellt bzw. erreicht werden kann. Durch die Wahl von Prozessparametern der additiven Fertigung, wie etwa Leistung oder/und Vorschubgeschwindigkeit des Laserstrahls, der das Aufschmelzen von aufgetragenem Pulver ermöglicht. Durch das Anpassen von entsprechenden Prozessparametern kann Einfluss genommen werden auf die Dichte oder/und die Porosität des zu fertigenden Bauteils bzw. der verfestigten Bereiche des Bauteils. Hierdurch kann eine weitere Einflussnahme bzw. Einstellung des Elastizitätsmoduls ermöglicht werden.

Das Pulver aus dem ersten Material bzw. der ersten Materialzusammensetzung kann beispielsweise ein metallisches oder keramisches Pulver sein. Denkbar sind auch Kombinationen aus metallischen und keramischen Materialien.

Bei dem additiven Herstellungsverfahren kann beim schichtweisen Aufbauen des Bauteils wenigstens ein weiteres Pulver aus einem weiteren Material oder einer weiteren Materialzusammensetzung verwendet wird, die sich von dem Pulver aus dem ersten Material oder der ersten Materialzusammensetzung unterscheidet. Die Verwendung von wenigstens einem weiteren Material bei der additiven Fertigung ermöglicht eine gezielte Beeinflussung der Eigenschwingungseigenschaften bzw. der Dämpfungseigenschaften des fertigen Bauteils. Insbesondere kann durch die Kombination von zwei oder auch mehr Materialen bzw. Materialzusammensetzungen der gewünschte Gradient in dem Bauteil bereitgestellt werden.

Das weitere Pulver kann als vollständige Pulverschicht aufgetragen werden, derart dass das Bauteil im Bereich dieser Schicht vollständig aus dem weiteren Material gefertigt wird. Alternativ können das erste Pulver und das wenigstens eine weitere Pulver gemeinsam eine aufgetragene Pulverschicht bilden, wobei die aufgetragene Pulverschicht Bereiche aus dem ersten Pulver und Bereiche aus dem weiteren Pulver aufweist, derart, dass das Bauteil im Bereich dieser Schicht teilweise aus dem ersten Material und teilweise aus dem weiteren Material gefertigt ist. Denkbar ist auch, dass sich bevorzugte Eigenschaften des Bauteils daraus ergeben, dass eine bestimmte Abfolge von Schichten aus unterschiedlichen Materialien bzw. Materialzusammensetzungen wiederholt eingesetzt wird, um das Bauteil additiv zu fertigen.

Die geometrische Struktur kann bei dem Verfahren aufgrund von Strukturdaten des Bauteils aufgebaut werden, wobei die Strukturdaten wenigstens teilweise aus einer pflanzlichen Struktur abgeleitete bionische Daten enthalten, derart, dass das fertige Bauteil zumindest abschnittsweise entsprechend der pflanzlichen Struktur aufgebaut ist. Auf diese Weise können die Bauteile zumindest bereichsweise in Anlehnung an biologische, insbesondere pflanzliche Strukturen aufgebaut sein, die für das Erreichen des gewünschten Gradienten vorteilhaft sein können. Beispielsweise kann das Bauteil abschnittsweise eine Struktur aufweisen, die sich aus dem Aufbau von Pfahlrohr (Arundo donax, auch Riesenschilf genannt) ableitet.

Durch das additive Herstellungsverfahren können als Bauteile beispielsweise die bereits erwähnte eine Schaufel einer Turbine oder eines Verdichters gefertigt werden. Weiter ist es möglich mittels des additiven Herstellungsverfahrens ein bereits beschriebenes Dichtungselement einer Turbine oder eines Verdichters zu fertigen, insbesondere eine Fischmauldichtung.

Nachfolgend wird die Erfindung unter Bezugnahme auf die anliegenden Figuren beispielhaft und nicht einschränkend beschrieben.
Fig. 1 zeigt beispielhaft und vereinfacht eine geometrische Struktur mit einem Gradienten im Elastizitätsmodul für Bauteile von Gasturbinen.
Fig. 2 zeigt in einem stark vereinfachten Profilschnitt als Beispiel eines Bauteils eine Schaufel einer Gasturbine mit nur teilweise und vereinfacht dargestellter geometrischer Struktur.
Fig. 3 zeigt ein schematisches Schaubild für die Bestimmung eines Gradienten.
Fig. 4 zeigt in einem stark vereinfachten Schnitt ein Dichtungselement einer Gasturbine mit einer Fischmauldichtung.
Fig. 5 zeigt in einer vereinfachten Darstellung als Beispiel eines Bauteils eine Vergrößerung der Fischmauldichtung der Fig. 3 mit nur teilweise und vereinfacht dargestellter geometrischer Struktur.
Fig. 6 zeigt in einem schematischen Diagramm ein additives Herstellungsverfahren für Bauteile einer Gasturbine.
Fig. 7 zeigt eine zur Figur 2 ähnliche Ansicht einer Schaufel einer Gasturnbine mit vereinfacht dargestellter geometrischer Struktur.

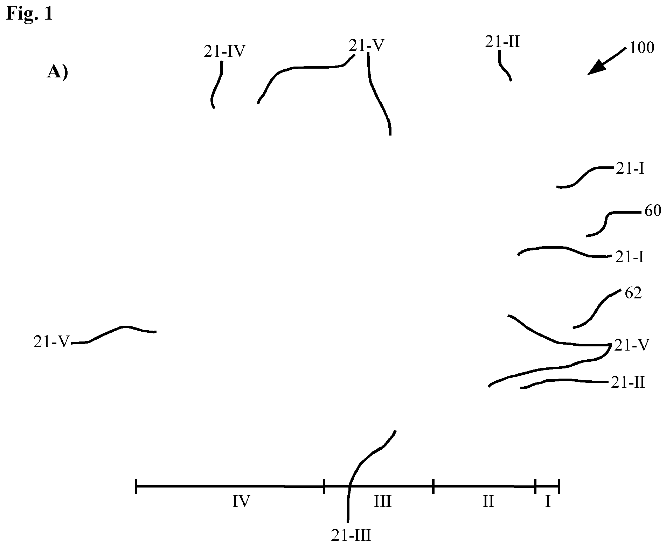

Fig. 1 zeigt in einer Schnittdarstellung einen Schnitt durch eine biologische Struktur 20, wie beispielsweise ein Pfahlrohr (Arundo donax). Die biologische Struktur 20, die in einem Bauteil gemäß der vorliegenden Erfindung als geometrische Struktur des Bauteils umgesetzt werden kann, weist insbesondere unterschiedlich dimensionierte Hohlräume 21 auf. Ferner weist die Struktur 20 Materialansammlungen 23 auf, welche die unterschiedlichen Hohlräume 21 begrenzen. Die Materialansammlungen 23 können unterschiedlich dimensioniert sein, insbesondere können solche Materialansammlungen 23 unterschiedlich dick sein oder/und eine unterschiedliche Länge aufweisen zwischen zwei Knoten bzw. Verbindungen zu einer benachbarten Materialansammlung. Die Materialansammlungen 23 können auch als röhrenartige oder rippenartige Wandungen bezeichnet werden, welche die Hohlräume 21 unterschiedlicher Größe begrenzen.

Es wird für die Fig. 1A) angenommen, dass vereinfacht ein Teil eines Bauteils 100 einer Gasturbine dargestellt ist und zwar in einem Profilschnitt, wobei eine Bauteilhauptrichtung BR orthogonal zur Schnittebene (Zeichnungsebene) verläuft. Bei dem Bauteil 100 für eine Gasturbine, das eine solche Struktur 20 aufweist, können ausgehend von einer Außenseite 60 in Richtung eines nicht näher dargestellten Innenbereichs des Bauteils 100 verschiedene Zonen bzw. Bereiche in der Struktur 20 vorgesehen sein. In einer sich an einen Randbereich 62 anschließenden ersten Zone I sind nur wenige oder lediglich sehr kleine Hohlräume 21-I vorgesehen. Die Materialansammlungen 23-I bilden in dieser Zone I fast ein Vollmaterial aus. Der Randbereich 62 des Bauteils 100 und die Außenseite 60 weisen einen anderen Aufbau als die Struktur 20 auf. Der Randbereich 62 und die Außenseite 60 können beispielsweise auch als Beschichtungen ausgeführt sein, die auf der Struktur 20 angeordnet sind bzw. aufgebracht sind. In einer zweiten Zone II sind größere Hohlräume 21-II vorgesehen. Ferner weist die Struktur 20 in dieser zweiten Zone auch mehrere Cluster von noch größeren Hohlräumen 21-V auf. Die Cluster von Hohlräumen 21-V sind in unregelmäßigen Abständen zueinander angeordnet. In einer dritten Zone III werden die Hohlräume 21-III noch etwas größer. Auch in dieser Zone III sind die Cluster von Hohlräumen 21-V enthalten. In einer vierten Zone IV erreichen die Hohlräume 21-IV eine relativ zu den Hohlräumen 21-I, 21-II und 21-III maximale durchschnittliche Größe. Auch in der vierten Zone IV sind Cluster von Hohlräumen 21-V angeordnet.

Nimmt man an, dass eine durch die Wandungen 23 eine jeweilige Hohlraumfläche begrenzt wird, kann für die Dimensionierung der Hohlräume in Relation zueinander folgendes gelten. Die größten Hohlräume 21-IV weisen eine durchschnittliche Fläche HA. Die durchschnittliche Fläche der Hohlräume 21-III beträgt etwa 40-80% der durchschnittlichen Fläche HA der Hohlräume 21-IV. Die durchschnittliche Fläche der Hohlräume 21-II beträgt etwa 10-50% der durchschnittlichen Fläche HA der Hohlräume 21-IV. Die durchschnittliche Fläche der Hohlräume 21-I beträgt etwa 0,1-20% der durchschnittlichen Fläche HA der Hohlräume 21-IV.

Aus der Fig. 1A) ist ferner ersichtlich, dass die Wandungen bzw. Materialansammlungen 23, welche die verschiedenen Hohlräume begrenzen, unterschiedliche Dicken aufweisen können. Beispielsweise sind Wandungen 23-V, die im Bereich der Cluster von Hohlräumen 21-V ausgebildet sind etwa 2 bis 10 mal so dick wie Wandungen, welche die Hohlräume 21-IV, 21-III oder 21-II begrenzen.

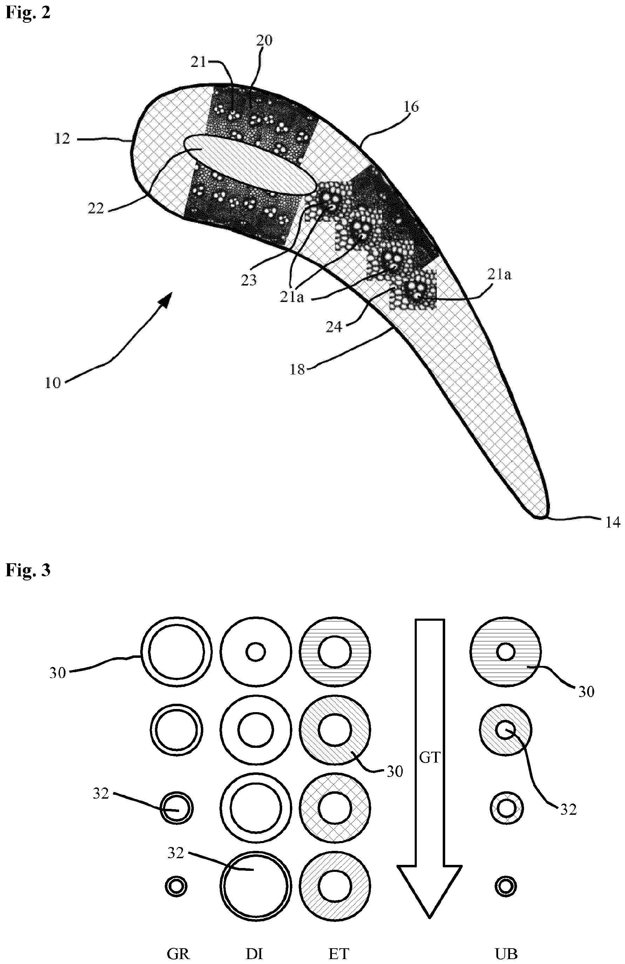

Fig. 2 zeigt in einer stark vereinfachten Profilschnittdarstellung eine Schaufel 10 einer Gastrubine, insbesondere einer Fluggasturbine. Die Schaufel 10 weist einen vorderen Abschnitt bzw. eine Vorderkante 12 und einen hinteren Abschnitt bzw. eine Hinterkante 14 auf. Zwischen der Vorderkante 12 und der Hinterkante 14 erstrecken sich die Saugseite 16 und die Druckseite 18 der Schaufel 10. Die Bauteilhauptrichtung entspricht bei der Schaufel 10 einer Längsachse der Schaufel 10, die im Wesentlichen orthogonal zur Schnittebene (Zeichnungsebene) verläuft. In einem eingebauten Zustand der Schaufel 10 in einer Gasturbine entspricht die Bauteilhauptrichtung im Wesentlichen der Radialrichtung der Gasturbine. Wie aus der Fig. 2 ersichtlich, weist die Schaufel 10 Bereiche mit unterschiedlichen geometrischen Strukturen auf. Beispielhaft sind eine erste Struktur 20, eine zweite Struktur 22 und eine dritte Struktur 24 dargestellt. Es wird darauf hingewiesen, dass die dargestellten Strukturen rein beispielhaft sind und nur dazu dienen den möglichen bereichsweisen Aufbau einer Schaufel 10 zu illustrieren, insbesondere sind dargestellte Abgrenzungen zwischen den beispielhaften Strukturen 20, 22, 24 oder/und Dimensionen nicht maßstäblich bzw. geometrisch genau zu verstehen in Relation zum gewählten Maßstab für den Schaufelquerschnitt. Die gekreuzte Schraffur 26 bezeichnet Bereiche, für die im vorliegenden Beispiel keine spezielle Struktur festgelegt ist. Die Bereiche 26 sind also eine Art grafischer Platzhalter, weil nicht die gesamte Querschnittsfläche der Schaufel 10 mit unterschiedlichen Strukturbeispielen 20, 22, 24 überfrachtet werden soll.

Die erste Struktur 20 ist angelehnt an einen Aufbau bzw. Querschnitt einer biologischen, insbesondere pflanzlichen Struktur, wie dies bereits oben für die Fig. 1A) beschrieben worden ist. Auch die dritte Struktur 24 kann nach dem Vorbild einer biologischen Struktur aufgebaut sein.
Die schräg schraffiert dargestellte zweite Struktur 22 kann beispielsweise ein Bereich sein, der als eine Art Kern aus einem Vollmaterial hergestellt ist, in dem insbesondere keine Hohlräume vorgesehen sind. Die geometrische Ausgestaltung der zweiten Struktur 22 ist hier nur beispielhaft als elliptische Form dargestellt und begrenzt. Ein Bereich in Form einer zweiten Struktur 22 kann jede beliebige andere Form annehmen. Ferner kann eine zweite Struktur 22 aus einem Vollmaterial beispielsweise auch eine Art Begrenzung oder Ring um eine erste Struktur 20 oder eine dritte Struktur 24 bilden.

Es wird noch darauf hingewiesen, dass beispielsweise Hohlräume 21a dazu eingerichtet sein können, für die Kühlung der Schaufel 10 zu dienen. Insbesondere ist es denkbar, dass in solchen Hohlräume 21a ein Fluid, insbesondere ein Kühlmittel, aufgenommen ist, bzw. im Betrieb zirkuliert, um die Schaufel 10 wirkungsvoll zu kühlen.

Wie in der Figur 2 beispielhaft gezeigt, kann eine nach dem beschriebenen Verfahren hergestellte Schaufel 10 mit den geometrischen Strukturen 20, 22, 24 so ausgebildet sein, dass aufgrund der Anordnung von Strukturen 20, 22, 24 in Relation zueinander oder/und aufgrund von Auswahl von Materialen, aus denen eine oder mehrere Strukturen 20, 22, 24 gebildet sind, von einer Außenseite, insbesondere der Saugseite 16 oder der Druckseite 18, zu einem Innenbereich 28 der Schaufel 10 ein Gradient bezüglich des Elastizitätsmoduls gebildet ist. Das heißt, dass der Elastizitätsmodul sich von außen nach innen bzw. umgekehrt verändert. Dabei kann der Gradient so ausgewählt werden, dass die resultierende Gesamtstruktur, etwa gebildet aus einer Kombination der beispielhaft dargestellten ersten, zweiten und dritten Struktur 20, 22, 24, unter Betriebsbedingungen in einer Gasturbine Eigenschaften aufweist, die zu einer Dämpfung von Eigenschwingungen (Eigendämpfung) führen.

Beispielhaft ist in Figur 3 anhand eines schematischen und vereinfachten Schaubildes dargestellt, wie ein gewünschter Gradient erreicht werden kann. In diesem Schaubild sind geometrische Strukturen schematisch und vereinfacht als einfache Kreise bzw. Ringe 30 illustriert. Die Kreise bzw. Ringe 30 weisen einen jeweiligen inneren Hohlraum 32 auf. Die erste Spalte GR steht für die Größe, insbesondere den Durchmesser, des Kreises bzw. Rings. Die zweite Spalte DI steht für die Dicke des Rings 30 bzw. den Innendurchmesser des Hohlraums 32. Die dritte Spalte ET zeigt durch unterschiedliche Schraffuren verschiedene Materialeigenschaften, welche die Ringe 30 aufweisen. Geht man die Spalten von oben nach unten durch, ergibt sich jeweils ein Gradient GT für die Größe, die Dicke und die Materialeigenschaften. Für die Größe GR beispielsweise von einem großen Durchmesser zu einem kleinen Durchmesser, für die Dicke des Rings 30 beispielsweise von einer großen Dicke zu einer geringen Dicke.

Die Spalte UB, rechts des Gradientpfeiles GT zeigt eine zeilenweise Überlagerung bzw. Superposition der zuvor beschriebenen drei Eigenschaften Große GR, Dicke DI und Materialeigenschaft ET. Hieraus wird ersichtlich, dass durch gezielte Auswahl von geometrischen Eigenschaften GR, DI und Materialeigenschaften ET für eine geometrische Struktur, hier beispielhaft der Kreisring 30 in der Spalte der Überlagerung UB, ein Gradient, insbesondere ein Gradient für den Elastizitätsmodul, eingestellt werden kann, so dass die Gesamtstruktur, die zumindest teilweise Kreisringen 30 gebildet sein kann, die gewünschten Eigenschaften in Bezug auf die Dämpfung von Eigenschwingungen aufweist. Wie bereits oben erläutert, kann der gewünschte Gradient in Bezug auf ein additiv hergestelltes Bauteil von einem Innenbereich zu einer Außenseite des Bauteils eingestellt werden.

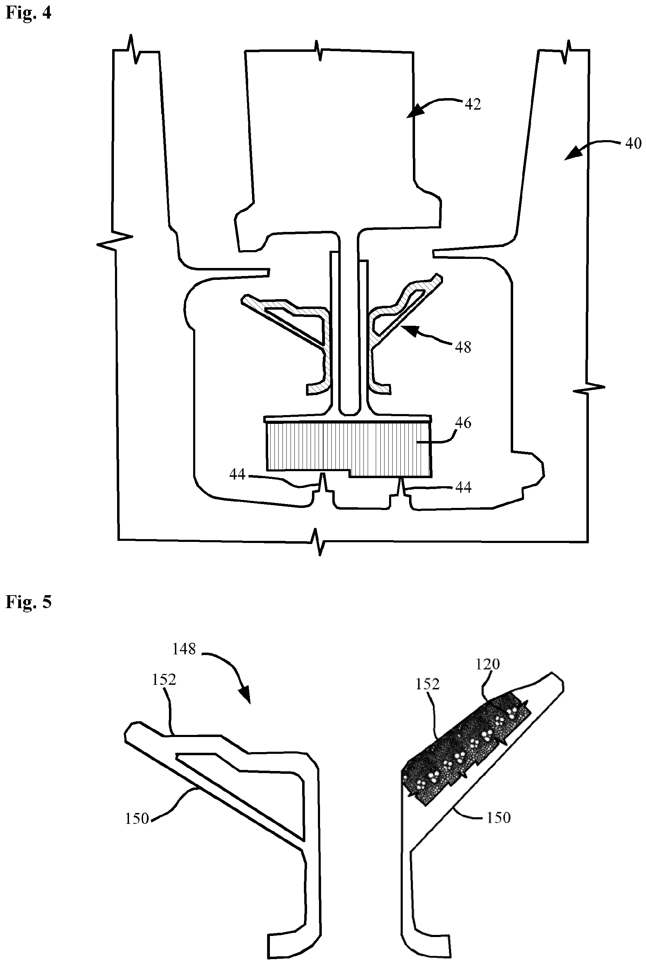

Figur 4 zeigt in einer schematischen und vereinfachten Schnittdarstellung ein rotorseitiges Bauteil 40 und ein statorseitiges Bauteil 42 einer Gasturbine. Am rotorseitigen Bauteil 40 sind Dichtvorsprünge 44, insbesondere Dichtfins 44 vorgesehen. Den Dichtfins 44 gegenüber ist am statorseitigen Bauteil 42 ein Dichtelement 46 angeordnet. Um die radial äußeren Bereiche zwischen dem statorseitigen Bauteil 42 und dem rotorseitigen Bauteil abzudichten, ist ein weiteres Dichtelement, insbesondere in Form einer Fischmauldichtung 48, vorgesehen. Fischmauldichtungen 48, wie sie in der Fig. 4 beispielhaft und vereinfacht dargestellt sind, weisen in der Regel eine komplexe dreidimensionale Metallblechstruktur auf, um Vibrationen und Schwingungen zu reduzieren bzw. zu vermeiden. Aufgrund der komplexen Formgebung weisen solche Fischmauldichtungen auch oft Abweichungen von der Sollgeometrie auf, was zum einen negative Auswirkungen auf das Schwingungsverhalten hat und zum anderen beim Einbau zu Schwierigkeiten führen kann.

Figur 5 zeigt eine zur Fischmauldichtung 48 der Figur 4 ähnliche vergrößerte Darstellung einer Fischmauldichtung 148. Die Fischmauldichtung 148 weist bezogen auf einen eingebauten Zustand in der Gasturbine eine radiale Innenseite 150 und eine radiale Außenseite 152 auf. Bei dieser Fischmauldichtung 148 ist in ihrem rechten Teil angedeutet, dass die Fischmauldichtung 148, insbesondere zwischen der radialen Innenseite 150 und der radialen Außenseite 152, eine geometrische Struktur aufweisen kann, wie sie oben für die Schaufel 10 (Fig. 2 und 3) vorgestellt worden ist. Die Fischmauldichtung 148 ist insbesondere mittels des vorgestellten Verfahrens hergestellt und weist beispielsweise eine Struktur 120 auf, die derart ausgebildet ist, dass innerhalb der Fischmauldichtung 148 ein Gradient in Bezug auf den Elastizitätsmodul ausgebildet ist, so dass Eigenschwingungen der Fischmauldichtung 148 gedämpft werden können. Wie aus der Fig. 5 ersichtlich, ist der rechte Teil der Fischmauldichtung 148 mit einer veränderten und vereinfachten geometrischen Form ausgebildet verblichen mit dem rechten Teil der Fischmauldichtung 48 der Fig. 4. Wie dies oben bereits für die Schaufel 10 erklärt worden ist, stellt die dargestellte Struktur 120 der Fischmauldichtung 148 lediglich eine beispielhafte Ausgestaltung dar, die weder in Bezug auf ihre Dimensionierungen noch die Anordnung von Hohlräumen und Materialansammlungen eine maßstabsgetreue Wiedergabe ist. Die Bauteilhauptrichtung für die Fischmauldichtung 148 entspricht einer Richtung die im Wesentlichen orthogonal zur Schnittebene (Zeichnungsebene) verläuft. Im eingebauten Zustand entspricht die Bauteilhauptrichtung im Wesentlichen der Umfangsrichtung der Gasturbine.

Die Schaufel 10 (Fig. 2) und die Fischmauldichtung 148 (Fig. 5) sind Beispiele für Bauteile einer Gasturbine, wobei diese Bauteile mittels des oben beschriebenen additiven Verfahrens so hergestellt werden, dass sie einen Gradienten aufweisen, der zur Eigendämpfung führt.

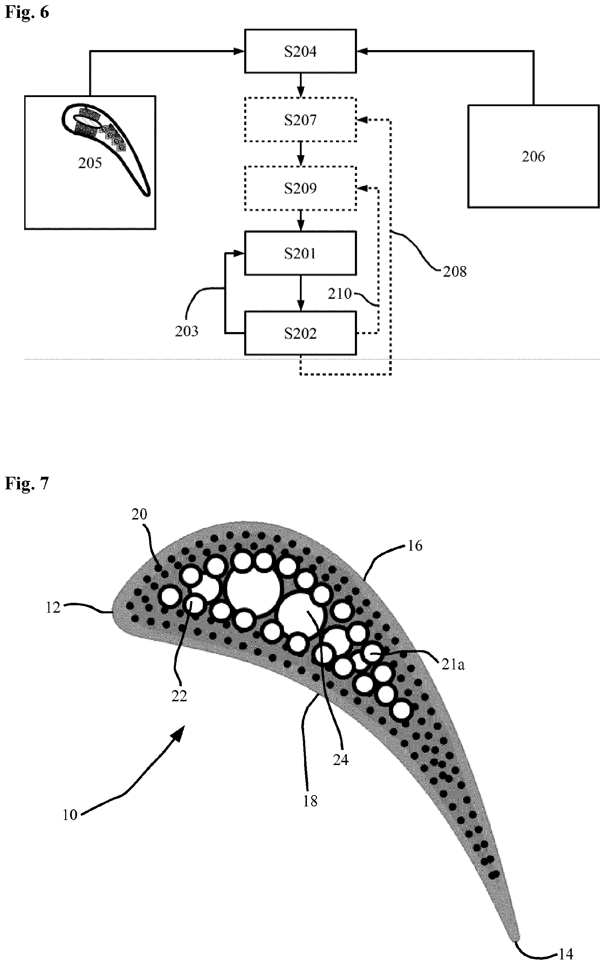

In Fig. 6 ist als schematisches und vereinfachtes Diagramm ein additives Herstellungsverfahren für Bauteile einer Gasturbine dargestellt. Das Verfahren umfasst die Schritte: schichtweises Aufbauen des Bauteils mit seiner geometrischen Struktur durch abwechselndes Auftragen einer Pulverschicht (S201) aus einem ersten Material oder aus einer ersten Materialzusammensetzung und zumindest bereichsweises Verfestigen der aufgetragenen Pulverschicht durch Erhitzen (S202). Wie dies hinlänglich bekannt ist, wird beim additiven Fertigen von Bauteilen, das Auftragen einer Pulverschicht und das bereichsweise Verfestigen der aufgetragenen Pulverschicht mehrfach nacheinander wiederholt, was durch den Pfeil 203 illustriert ist.

Damit die geometrische Struktur des zu fertigenden Bauteils so ausgestaltet werden kann, dass für das fertige Bauteil ein Gradient eingestellt wird, der im fertigen Bauteil zu Eigendämpfung führt, werden bei dem Herstellungsverfahren Strukturdaten des Bauteils zur Verfügung gestellt (S204). Dies erfolgt üblicherweise zu Beginn des additiven Fertigungsverfahrens, also bevor ein erstes Mal eine Pulverschicht aufgetragen und anschließend verfestigt wird. Wie dies in der Box 205 angedeutet ist, können die Strukturdaten wenigstens teilweise aus einer pflanzlichen Struktur abgeleitete bionische Daten enthalten, derart, dass das fertige Bauteil zumindest abschnittsweise entsprechend der pflanzlichen Struktur aufgebaut ist. Es ist klar, dass die in der Box 205 dargestellten bildlichen Daten für das Verfahren entsprechend aufbereitet sind, derart, dass einer Vorrichtung zum additiven Fertigen entsprechende Steuerdaten, insbesondere Koordinaten, für den Pulverauftrag sowie das Verfestigen mittels Erhitzen an gewünschten Stellen der Pulverschicht zur Verfügung gestellt werden.

Alternativ oder in Kombination können Werkstoffdaten bereitgestellt werden, was durch die Box 206 angedeutet ist. Die Werkstoffdaten können ebenfalls im Schritt S204 zur Verfügung gestellt werden. Den zur Verfügung gestellten Werkstoffdaten kann beispielsweise die Information entnommen werden, ob eine Pulverschicht aus einem anderen Material aufgetragen werden soll. Entsprechend kann das Verfahren einen optionalen Schritt S207 aufweisen, in dem das Material bzw. die Materialzusammensetzung für ein aufzutragende Pulverschicht ausgewählt wird. Entsprechend wird dann die Vorrichtung zum additiven Fertigen so angesteuert, dass eine Pulverschicht aus dem gewünschten Material aufgetragen wird. Die Abfrage, welches Material als Pulverschicht aufgetragen werden soll, kann während des Herstellungsverfahrens auch mehrfach durchlaufen werden, was durch den Pfeil 208 angedeutet ist.

Alternativ oder in Kombination können Prozessparameter des additiven wie etwa Leistung oder/und Vorschubgeschwindigkeit des Laserstrahls, der das Aufschmelzen von aufgetragenem Pulver ermöglicht, eingestellt bzw. angepasst werden, was durch den Schritt S209 illustriert ist. Durch das Anpassen von entsprechenden Prozessparametern kann Einfluss genommen werden auf die Dichte oder/und die Porosität des zu fertigenden Bauteils bzw. der verfestigten Bereiche des Bauteils. Dabei kann die Wahl bzw. Einstellung der Prozessparameter auch in Abhängigkeit von einem gewählten Material der Pulverschicht erfolgen. Die Abfrage, welche Prozessparameter eingesetzt werden soll, kann während des Herstellungsverfahrens auch mehrfach durchlaufen werden, was durch den Pfeil 210 angedeutet ist.

Bei dem schichtweisen Aufbauen des Bauteils durch wiederholtes Durchführen der Schritte S201 (Pulverschicht auftragen) und S202 (Pulverschicht verfestigen) können also wenigstens zwei unterschiedliche Pulver eingesetzt werden, was durch den Schritt S207 angedeutet ist, wenn das Bauteil nicht nur aus einem einzigen Material hergestellt werden soll.

Während des Schritts S201 des additive Herstellungsverfahrens können Pulverschichten aus unterschiedlichen Materialeien beispielsweise als jeweils vollständige Pulverschicht aufgetragen werden, derart, dass das Bauteil im Bereich dieser Schicht vollständig aus dem betreffenden Material gefertigt wird. Während des Schritts S201 können aber auch ein erstes Pulver und wenigstens ein weiteres Pulver gemeinsam eine aufgetragene Pulverschicht bilden, wobei die aufgetragene Pulverschicht Bereiche aus dem ersten Pulver und Bereiche aus dem weiteren Pulver aufweist, derart, dass das Bauteil im Bereich dieser Schicht teilweise aus dem ersten Material und teilweise aus dem weiteren Material gefertigt wird bzw. ist.

Durch den mit dem Schritt S204 angedeuteten Bereitstellen von Strukturdaten 205 und alternativ auch von Werkstoffdaten 206 ist es möglich, ein Bauteil für ein Gasturbine mittels additivem Fertigen derart herzustellen, dass das fertige Bauteil einen Gradienten aufweist, der zur Eigendämpfung führt. Dies kann insbesondere dadurch erreicht werden, dass die geometrischen Strukturdaten wenigstens teilweise abgeleitet sind von biologischen, insbesondere pflanzlichen Vorlagen, wobei diese Vorlagen als bionische Daten in die Strukturdaten einfließen können.

Abschließend wird noch auf Figur 7 hingewiesen, in der eine zur Figur 2 ähnliche Darstellung einer Schaufel 10 gezeigt ist. Die Schaufel 10 weist einen vorderen Abschnitt bzw. eine Vorderkante 12 und einen hinteren Abschnitt bzw. eine Hinterkante 14 auf. Zwischen der Vorderkante 12 und der Hinterkante 14 erstrecken sich die Saugseite 16 und die Druckseite 18 der Schaufel 10. Die Bauteilhauptrichtung entspricht bei der Schaufel 10 einer Längsachse der Schaufel 10, die im Wesentlichen orthogonal zur Schnittebene (Zeichnungsebene) verläuft. In einem eingebauten Zustand der Schaufel 10 in einer Gasturbine entspricht die Bauteilhauptrichtung im Wesentlichen der Radialrichtung der Gasturbine.

Wie aus der Fig. 7 ersichtlich, weist die Schaufel 10 Bereiche mit unterschiedlichen geometrischen Strukturen auf. Beispielhaft sind eine erste Struktur 20, eine zweite Struktur 22 und eine dritte Struktur 24 dargestellt. Es wird darauf hingewiesen, dass die dargestellten Strukturen rein beispielhaft sind und nur dazu dienen den möglichen bereichsweisen Aufbau einer Schaufel 10 zu illustrieren, insbesondere sind dargestellte Abgrenzungen zwischen den beispielhaften Strukturen 20, 22, 24 oder/und Dimensionen nicht maßstäblich bzw. geometrisch genau zu verstehen in Relation zum gewählten Maßstab für den Schaufelquerschnitt.

Die Strukturen 20, 22, 24 sind in ihrer Gesamtheit angelehnt an einen Aufbau bzw. Querschnitt einer biologischen, insbesondere pflanzlichen Struktur, wie dies bereits oben für die Fig. 1A) bzw. 2 beschrieben worden ist.

Es wird noch darauf hingewiesen, dass beispielsweise Hohlräume 21a dazu eingerichtet sein können, für die Kühlung der Schaufel 10 zu dienen. Insbesondere ist es denkbar, dass in solchen Hohlräume 21a ein Fluid, insbesondere ein Kühlmittel, aufgenommen ist, bzw. im Betrieb zirkuliert, um die Schaufel 10 wirkungsvoll zu kühlen.

### Bezugszeichenliste

- 10: Schaufel
- 12: Vorderkante
- 14: Hinterkante
- 16: Saugseite
- 18: Druckseite
- 20: erste Struktur
- 21: Hohlraum
- 21a: Hohlraum für Fluid
- 21-I bis 21-V: Hohlräume
- 22: zweite Struktur
- 23: Materialansammlung bzw. Wandung
- 24: dritte Struktur
- 26: Bereich ohne dargestellte Struktur
- 30: Kreis bzw. Ring bzw. Kreisring
- 32: Hohlraum
- 40: rotorseitiges Bauteil
- 42: statorseitiges Bauteil
- 44: Dichtvorsprung bzw. Dichtfin
- 46: Dichtelement
- 48: Fischmauldichtung
- 60: Außenseite
- 62: Randbereich
- 100: Bauteil
- 120: Struktur
- 148: Fischmauldichtung
- 150: Radiale Innenseite
- 152: Radiale Außenseite
- S20X: Verfahrensschritte
- 205: Strukturdaten
- 206: Werkstoffdaten

## Patentansprüche

1. Bauteil (10; 100; 148) für eine Gasturbine, insbesondere Fluggasturbine, wobei das Bauteil (10; 100; 148) im Betrieb der Gasturbine im Einflussbereich einer Primärströmung oder einer Sekundärströmung von die Gasturbine durchströmendem Fluid angeordnet ist, wobei das Bauteil (10; 100; 148) eine Bauteilhauptrichtung aufweist, die im eingebauten Zustand des Bauteils (10; 100; 148) in der Gasturbine der Axialrichtung oder der Radialrichtung oder der Umfangsrichtung der Gasturbine entsprechen kann, wobei das Bauteil bezogen auf einen zur Bauteilhauptrichtung im Wesentlichen orthogonal verlaufenden Profilquerschnitt, wenigstens einen Bereich aufweist, der eine geometrische Struktur (20, 24) mit untereinander verbundenen rippenartigen Wandungen (23) und von den Wandungen (23) umgebenen Hohlräumen (21, 21-I, 21-II, 21-III, 21-IV, 21-V) aufweist, wobei die Wandungen (23) und die Hohlräume (21, 21-I, 21-II, 21-III, 21-IV, 21-V) derart ausgebildet sind, dass das Bauteil (10; 100; 148) in einer Richtung quer, insbesondere orthogonal, zur Bauteilhauptrichtung einen Gradienten im Elastizitätsmodul aufweist, der zu Eigendämpfung führt.

2. Bauteil nach Anspruch 1, wobei die geometrische Struktur (20, 24) zumindest abschnittsweise einer pflanzlichen Struktur nachgebildet ist.

3. Bauteil nach Anspruch 2, wobei die geometrische Struktur (20, 24) zumindest abschnittsweise von dem Aufbau von Pfahlrohr (Arundo donax) abgeleitet ist.

4. Bauteil nach einem der vorhergehenden Ansprüche, wobei sich die geometrische Struktur (20, 24) entlang der Bauteilhauptrichtung über wenigstens 50% der Länge des Bauteils (10; 100; 148) in der Bauteilhauptrichtung erstreckt.

5. Bauteil nach einem der vorhergehenden Ansprüche, wobei die geometrische Struktur (20, 24) bezogen auf die Gesamtfläche eines Profilquerschnitts durch das Bauteil (10; 100; 148) wenigstens 20% der Gesamtfläche einnimmt.

6. Bauteil nach einem der vorhergehenden Ansprüche, wobei die geometrische Struktur bezogen auf den Profilquerschnitt des Bauteils (10; 100; 148) entlang des Umfangs des Bauteils (10; 100; 148) angeordnet ist.

7. Bauteil nach Anspruch 6, wobei das Bauteil (10; 100; 148) wenigstens einen Kernabschnitt (22) aufweist, der von der geometrischen Struktur (20, 24) umgeben ist, wobei der Kernabschnitt (22) aus einem Vollmaterial gebildet ist.

8. Bauteil nach einem der vorhergehenden Ansprüche, wobei das Bauteil eine Schaufel (10) für eine Turbine oder einen Verdichter der Gasturbine, insbesondere Fluggasturbine, ist, mit einer Vorderkante (12) und einer Hinterkante (14), die im Wesentlichen parallel zur Bauteilhauptrichtung verlaufen, wobei zwischen der Vorderkante (12) und der Hinterkante (14) eine Saugseite (16) und einer Druckseite (18) verlaufen, wobei die geometrische Struktur bei der Schaufel (10) zwischen der Saugseite (16) und der Druckseite (18) ausgebildet ist.

9. Bauteil nach Anspruch 8, wobei die geometrische Struktur derart ausgestaltet ist, dass zumindest ein der pflanzlichen Struktur nachgebildeter Hohlraum (21) als Kühlkanal (21a) eingerichtet ist, insbesondere als Kühlkanal zur Kühlung, insbesondere Luftkühlung der Schaufel.

10. Bauteil nach Anspruch 8 oder 9, wobei die Schaufel (10) im Bereich zwischen der Saugseite (16) und der Druckseite (18) zumindest abschnittsweise wenigstens zwei unterschiedliche Materialien oder unterschiedliche Materialzusammensetzungen aufweist.

11. Bauteil nach einem der Ansprüche 1 bis 7, wobei das Bauteil ein Dichtungselement, insbesondere eine Fischmauldichtung (148), für eine Turbine oder einen Verdichter der Gasturbine, insbesondere Fluggasturbine, ist mit einer bezogen auf einen eingebauten Zustand in der Gasturbine radialen Innenseite (150) und einer radialen Außenseite (152), wobei die Bauteilhauptrichtung im Wesentlichen der Umfangsrichtung der Gasturbine entspricht, und wobei das Dichtungselement zwischen der radialen Innenseite (150) und der radialen Außenseite (152) wenigstens einen Bereich aufweist, der die geometrische Struktur (120) aufweist.

12. Bauteil nach Anspruch 11, wobei das Dichtungselement im Bereich zwischen der radialen Innenseite (150) und der radialen Außenseite (152) abschnittsweise wenigstens zwei unterschiedliche Materialien oder unterschiedliche Materialzusammensetzungen aufweist.

13. Additives Verfahren zur Herstellung eines Bauteils nach einem der vorhergehenden Ansprüche,
umfassend die Schritte:
im Wesentlichen entlang der Bauteilhauptrichtung schichtweises Aufbauen des Bauteils mit seiner geometrischen Struktur (20, 22, 24; 120) durch abwechselndes Auftragen (S201) einer Pulverschicht aus einem ersten Material oder aus einer ersten Materialzusammensetzung und zumindest bereichsweises Verfestigen (S202) der aufgetragenen Pulverschicht durch Aufschmelzen und anschließendes Abkühlen, so dass insbesondere die rippenartigen Wandungen im Bereich der geometrischen Struktur verfestigt werden.

14. Additives Verfahren zur Herstellung eines Bauteils nach einem der Ansprüche 1 bis 12, umfassend die Schritte:
im Wesentlichen entlang der Bauteilhauptrichtung schichtweises Aufbauen des Bauteils (10; 48) mit seiner geometrischen Struktur durch abwechselndes Auftragen (S2019 einer Pulverschicht aus einem ersten Material oder aus einer ersten Materialzusammensetzung und zumindest bereichsweises Verfestigen (S202) der aufgetragenen Pulverschicht durch Aufschmelzen und anschließendes Abkühlen,
wobei die Werkstoffeigenschaften (S206) des aufzutragenden Pulvers oder/und Prozessparameter (S209) der additiven Fertigung derart gewählt werden, dass für das fertige Bauteil (10; 48) ein Gradient (GT) eingestellt wird, der im fertigen Bauteil (10; 48) zu Eigendämpfung führt.

15. Verfahren nach Anspruch 13 oder 14, wobei beim schichtweisen Aufbauen des Bauteils (10; 48) wenigstens ein weiteres Pulver aus einem Material oder einer weiteren Materialzusammensetzung verwendet wird (S207), die sich von dem Pulver aus dem ersten Material oder der ersten Materialzusammensetzung unterscheidet,
wobei vorzugsweise das weitere Pulver als vollständige Pulverschicht aufgetragen wird, derart, dass das Bauteil (10; 48) im Bereich dieser Schicht vollständig aus dem weiteren Material gefertigt wird,
oder wobei vorzugsweise das erste Pulver und das wenigstens eine weitere Pulver gemeinsam eine aufgetragene Pulverschicht bilden, wobei die aufgetragenen Pulverschicht Bereiche aus dem ersten Pulver und Bereiche aus dem weiteren Pulver aufweist, derart, dass das Bauteil (10; 148) im Bereich dieser Schicht teilweise aus dem ersten Material und teilweise aus dem weiteren Material gefertigt ist.
